# EUROPEAN PATENT SPECIFICATION

(11) **EP 3 003 597 B1**
(45) Date of publication and mention of the grant of the patent: **24.04.2019**
(21) Application number: 13729158.9
(22) Date of filing: 28.05.2013
(51) Int. Cl.: B21K 23/00, F16B 37/00, F16B 37/02

(54) **ASSEMBLY COMPRISING FASTENING MEANS AND METHOD**
ANORDNUNG MIT BEFESTIGUNGSMITTELN UND VERFAHREN
ESSEMBLE COMPRENANT DES ÉLÉMENTS DE FIXATION ET PROCÉDÉ

(43) Date of publication of application: 13.04.2016
(73) Proprietor: Adient Luxembourg Holding S.à r.l., 1855 Luxembourg (LU)
(72) Inventor: WINTERS, Frederic, T., South Lyon, MI 48175 (US); WHITE, Steve, E., Farmington Hills, MI 48334 (US); CIGUT, Dean, E., Clay Township, MA 48001 (US); ERARD, Andrew, J., Ceresco, MI 49033 (US); GRUBAUGH, Kenneth, R., Howell, MI 48843 (US)
(74) Representative: Loock, Jan Pieter
(86) International application number: PCT/US2013/042836
(87) International publication number: WO 2014/193339

(56) References cited:
- WO-A1-2009/094775
- GB-A- 2 174 024
- US-A- 5 273 385

## Description

### Prior art

The invention relates to the subject described in the preamble of the main claim.

The fastening means of such assemblies are well known and are usually provided and designed for engaging with fractional or positively locking means such as a screw, in particular a thread rolling screw. Typically the height of the protuberance is equal or greater than the diameter of the fractional or positively locking means, for example the diameter of the screw. At the same time the inner side of the protuberance usually has straight sides, i.e. walls forming the protuberance realize a cylinder substantially, in particular a straight hollow cylinder. Another feature of such fastening means known from the prior art is the throat that links the inner side of the protuberance with the prime surface of the plate, wherein the radius of the circle segment is about 1.25 times greater than the thickness of the plate/material the protuberance was made from.

Although these fastening means known from the prior art are popular in diverse areas of engineering such as fastener engineering, their use is potentially restricted by defects on the surface of the protuberance, in particular defects on the surface of the inner side of the protuberance. Such defects are mainly caused by the straight sides and the protuberance height being equal or bigger than the diameter of the locking means. More specifically, both features, namely straight sides and protuberance height, make it difficult to release a die easily whenever the die is forming the inner side of the protuberance. A possible method to circumvent these defects is keeping the press speed at a minimum in order to minimize the creation of unwanted defects.

Assemblies with such fastening means are e.g. known from GB 2 174 024 A on which the preamble of claim 1 is based.

### Disclosure of the invention

It is an object of the present invention to provide an assembly comprising fastening means that can be realized such that defects on the surface of the inner side can be avoided mainly and nevertheless the time of manufacturing is still reasonable.

It is a further object of the present invention to provide an assembly comprising several such fastening means with reduced required distance between two fastening means.

The object of the present invention is solved by an assembly according to claim 1. According to the present invention the first inside diameter Di' is greater than the second inside diameter Di". By this a tilt angle or draft angle on the inner side of the protuberance is realized, advantageously. In more detail the advantage of the assembly according to the present invention is the reduction of surface defects potentially located on the inner side of the protuberance, because the die can be released in an easier fashion (compared to a protuberance with straight side). Along with this positive effect, the press speed of manufacturing the protuberance can be increased, advantageously. Since tools are required less by the generating of the protuberances according to the present invention, another positive effect of the present invention is the extending of the tool life of the tools producing the protuberance. Since the throat section comprises a circle segment with a circle radius R corresponding to R=0.33*T, the smaller throat section allows reducing the required distance between two fastening means.

According to a preferred embodiment it is also provided that the protuberance has an opening. Advantageously, such an opening allows using the fastening means bidirectionally, i. e. for example a screw can be inserted into the fastening means along a direction showing in the direction of the protuberance or in opposite direction. Additionally it is also conceivable that the inner side of the protuberance comprise a thread.

According to another embodiment of the present invention it is provided that the plate has a thickness T and the half of the difference between the inner diameter Di and the outer diameter Do is smaller than the thickness T of the plate.

In another preferred embodiment of the present invention it is provided that the inner side of the protuberance is designed such that a maximal difference ADi between the first inside diameter Di' and the second inside diameter DI" corresponds to ΔDi=DIS*tan α, wherein a tilt angle α is around 1° and DIS is the distance between the first plane and the second plane (, i.e. DIS= |Di'-Di"|) The tilt angle α is a measure how much the inner side of the protuberance is tapered compared to a cylindrical shaped protuberance, which is known from the prior art. It is also conceivable, that the tilt angle α changes along the extension of the protuberance, in particular the tilt angle changes gradually. By this it may be possible to optimize the fastening properties with respect to the fractional or positively locking means provided for the fastening means individually.

In another embodiment it is provided that the fastening means has a protuberance height H corresponding to the distance between the plane that includes the prime surface and the plane being parallel to the main plane that includes the part of the protuberance located furthermost relative to the plane that includes the prime surface. In particular, it is provided that the protuberance height H is smaller than any inside diameter Di of the protuberance.

Compared to protuberances with a height greater than the inside diameter, fewer station of manufacturing are needed for producing the fastening means with such short protuberances. Therefore tooling costs and processing time can be reduced, advantageously,

In another preferred embodiment of the present invention the protuberance height is designed such that the frictional and/or positively locking mean exits the protuberance provided that the frictional or positively locking mean is engaged with the protuberance in a fractional or positively locking fashion. It is an advantage of this embodiment, that the fastening means is compatible with several fraction or positively locking means, in particular several fraction or locking means having different length. As a result the fastening means is flexible in use and not limited to one special kind of fraction or positively locking means.

In another embodiment the change of the diameter ΔDi and/or the throat diameter and/or the height H vary due to engineering and/or manufacturing purposes. It is an advantage of the present invention that the fastening means can be used in a wide field of applications because the function of the fastening means is already realized by a small protuberance. Thus it is possible in an advantageous way to adapt the fastening means to the environment the fastening means is provided for. In contrast to this the use of fastening means known from the prior art are sometimes limited by their surroundings,

In addition the present invention provides that the assembly of several fastening means, wherein several fastening means are arranged on one common plate, is manufactured using a press and several dies for realizing the assembly in one step. It is also convincible that an assembly of fastening means is generated in a first process and subsequently the assembly is divided into several small units that comprises at least one fastening means. Thus it is advantageously possible to increase the number of such units that are manufactured per unit time.

Additionally the present invention includes also a method for generating an assembly as described above. It is provided that the method according to the present invention comprises an extrusion process for forming the protuberance. More specifically, a die produce the protuberance in combination with a press mean, like a hydraulic press for example. Actually the method is not restricted to cold extrusion. Other extrusion processes, like hot extrusion, are also conceivable.

### Short description of the figures

Figure 1 shows a sectional view of a fastening means of an assembly according to an embodiment of the present invention.
Figure 2 shows geometrical fundaments regarding a tilt that is realized whenever a protuberance is designed according to the present invention.

### Embodiments of the present invention

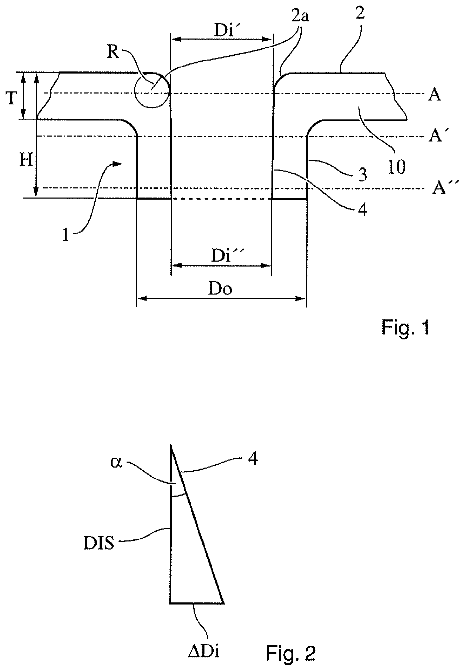

Figure 1 shows a sectional view of a fastening means of an assembly according to an embodiment of the present invention, wherein a protuberance projects from a plate 10 with a thickness T and comprises both an inner side 4 and an outer side 3. Mainly the inner side 4 and the outer side 3 of the extrusion form a wall that is able to receive frictional or positively locking means such as a screw. In particular, the inner side is provided for contacting frictional or positively locking means and thus realizing the positive locking and or the frictional locking. Usually the interior of the protuberance formed by the inner side of the extrusion is shaped like a cylinder, substantially,

In detail figure 1 illustrates that the plate 10. which expands across a main plane A, has a prime surface 2 facing away from the protuberance. It is provided that the prime surface passes over to the inner side of the extrusion via a throat section 2a. The throat section 2a is designed such that a circle segment is at least partially expanding in a plane perpendicular to the main plain A. The curvature of the circle segment is specified by a radius R, wherein the radius R corresponds to the circle illustrated as dotted line in figure 1. The height H of the extrusion reaches from the plane including the prime surface 2 to the plane that is parallel to the main plane (therefore usually also being parallel to the prime surface) and that includes a part of the protuberance being located furthermost from the plane that includes the prime surface,

Both the inner side and the outer side of the extrusion form circles in planes being parallel to the main plain A respectively, wherein the inner side 4 forms a circle with an inside diameter Di and wherein the outer side 3 forms a circle with an outer diameter Do. As depictured in figure 1 the inner diameter Di is smaller than the outer diameter Do. According to the present invention it is provided that a first inside diameter Di' in a first plane A' is greater than a second diameter Di" in a second plane A", wherein both the first and the second plane A' and A" are parallel to the main plane and the first cross section A' is located closer to the prime surface 2 than the second cross section A". Designing the protuberance 1 like that, it is possible to reduce the height H of the extrusion 1. In particular, it is advantageously possible to realize an extrusion 1 for engaging with positively locking means, wherein the height H of protuberance is smaller than the inside diameters Di along the protuberance.

Figure 2 shows the geometrical fundaments for describing a tilt that is realized whenever a protuberance is designed according to the present invention. Such a tilt is observable in the case of looking at the extrusion, especially at the inner side 4 of the extrusion, along a direction being parallel to the main plan. The tilt of the inner side of the extrusion relative to a plane being perpendicular to the main plane can be determined by a tilt angle α. The tilt angle α defines the difference ΔD between the first inside diameter Di' and the second inside diameter Di" in dependence on the distance DIS between the first plane A' and the second plane A". In particular, it is provided that ΔD equals DIS*tan α.

### List of references

- 1: protuberance
- 2: prime surface
- 2a: throat section
- 3: outer side
- 4: inner side
- 10: plate
- A: main plane
- A': first plane being parallel to main plane
- A": second plane being parallel to main plane
- T: Thickness of the plate
- H: protuberance height
- Di: inside diameter
- Do: outside diameter
- Di': first inside diameter
- Di": second inside diameter

## Claims

1. Assembly comprising several fastening means arranged on a common plate, wherein each fastening means is provided for engaging with frictional or positively locking means in a friction or positively locking fashion and comprises a protuberance realized as an extrusion, wherein:
-- the protuberance (1) projects from the plate (10), said plate (10) expanding along a main plane (A) and having a prime surface (2) facing away from the protuberance (1),
-- the protuberance (1) comprises an inner side (4), wherein the inner side (4) forms a circle having an inside diameter Di in a plane being parallel to the main plane,
-- a first plane (A') being parallel to the main plane (A) includes a circle with the first inside diameter Di' and a second plane (A") being parallel to the main plane (A) includes a circle with the second inside diameter Di", and wherein the first plane (A') is closer to the prime surface (2) than the second plane (A"), wherein the first inside diameter Di' is greater than the second inside diameter Di",
-- the fastening means has a throat section (2a) that at least partially forms a circle segment with a circle radius R in a plane being perpendicular to the main plane, wherein the plate (10) has a thickness T, wherein the throat section (2a) links the prime surface (2) of the plate (10) with the inner side (4) of the protuberance (1) mainly and wherein the throat section comprises a circle segment with a circle radius R,
**characterised in that** said circle radius R corresponds to R=0.33*T.

2. Assembly as claimed in claim 1, **characterized in that** the protuberance (1) has an opening.

3. Assembly as claimed in one of the preceding claims, **characterized in that** in the plane parallel to the main plane (A), in which the inside diameter Di is defined, the outer side (3) of the protuberance (1) forms a circle with an outer diameter Do and the half of the difference between the inner diameter Di and the outer diameter Do is smaller than the thickness T of the plate (10).

4. Assembly as claimed in one of the preceding claims, **characterized in that** the maximal difference ΔDi between the first inside diameter Di' and the second inside diameter Di' corresponds to ΔDi=DIS*tan α, wherein a tilt angle α is 1° substantially and DIS is the distance between the first plane and the second plane.

5. Assembly as claimed in one of the preceding claims, **characterized in that** the fastening means has a protuberance height H corresponding to the distance between the plane that includes the prime surface (2) and the plane being parallel to the main plane that includes the part of the protuberance located furthermost relative to the plane that includes the prime surface, wherein the protuberance height H is smaller than any inside diameter Di of the protuberance.

6. Assembly as claimed in one of the preceding claims, **characterized in that** said frictional and/or positively locking mean is engaged with the protuberance in a frictional or positively locking fashion, and **in that** the protuberance height is such that the frictional and/or positively locking mean exits the protuberance.

7. Method for generating an assembly according to one of the preceding claims, wherein the method comprises an extrusion process.

## Patentansprüche

1. Anordnung, umfassend mehrere Befestigungsmittel, angeordnet auf einer gemeinsamen Platte, wobei jedes Befestigungsmittel für ein Eingreifen mit kraftschlüssig oder formschlüssig blockierenden Mitteln in einer kraftschlüssig oder formschlüssig blockierenden Weise vorgesehen ist und einen Vorsprung umfasst, der als eine Extrusion realisiert ist, wobei:
- der Vorsprung (1) von der Platte (10) vorsteht, wobei sich die Platte (10) entlang einer Hauptebene (A) erstreckt und eine Hauptoberfläche (2) aufweist, die von dem Vorsprung (1) abgewandt ist,
- der Vorsprung (1) eine innere Seite (4) umfasst, wobei die innere Seite (4) einen Kreis mit einem Innendurchmesser Di in einer Ebene parallel zu der Hauptebene bildet,
- eine erste Ebene (A'), die parallel zu der Hauptebene (A) verläuft, einen Kreis mit dem ersten Innendurchmesser Di' beinhaltet, und eine zweite Ebene (A"), die parallel zu der Hauptebene (A) verläuft, einen Kreis mit dem zweiten Innendurchmesser Di" beinhaltet, und wobei die erste Ebene (A') der Hauptoberfläche (2) näher ist als die zweite Ebene (A"), wobei der erste Innendurchmesser Di' größer als der zweite Innendurchmesser Di" ist,
- das Befestigungsmittel einen Halsabschnitt (2a) aufweist, der mindestens teilweise ein Kreissegment mit einem Kreisradius R in einer Ebene, die senkrecht zu der Hauptebene ist, ausbildet, wobei die Platte (10) eine Dicke T hat, wobei der Halsabschnitt (2a) die Hauptoberfläche (2) der Platte (10) hauptsächlich mit der inneren Seite (4) des Vorsprungs (1) verbindet, und wobei der Halsabschnitt ein Kreissegment mit einem Kreisradius R umfasst, **dadurch gekennzeichnet, dass** der Kreisradius R der Gleichung R = 0,33 * T entspricht.

2. Anordnung nach Anspruch 1, **dadurch gekennzeichnet, dass** der Vorsprung (1) eine Öffnung aufweist.

3. Anordnung nach einem der vorangehenden Ansprüche, **dadurch gekennzeichnet, dass** in der Ebene parallel zu der Hauptebene (A), in welcher der Innendurchmesser Di definiert ist, die äußere Seite (3) des Vorsprungs (1) einen Kreis mit einem Außendurchmesser Do ausbildet und die Hälfte der Differenz zwischen dem Innendurchmesser Di und dem Außendurchmesser Do kleiner als die Dicke T der Platte (10) ist.

4. Anordnung nach einem der vorangehenden Ansprüche, **dadurch gekennzeichnet, dass** die maximale Differenz ΔDi zwischen dem ersten Innendurchmesser Di' und dem zweiten Innendurchmesser Di' der Gleichung ΔDi = DIS * tan α entspricht, wobei ein Neigungswinkel α im Wesentlichen 1° beträgt und DIS der Abstand zwischen der ersten Ebene und der zweiten Ebene ist.

5. Anordnung nach einem der vorangehenden Ansprüche, **dadurch gekennzeichnet, dass** das Befestigungsmittel eine Vorsprungshöhe H aufweist, die dem Abstand zwischen der Ebene, welche die Hauptoberfläche (2) beinhaltet, und der Ebene, die parallel zu der Hauptebene verläuft, die den Teil des Vorsprungs beinhaltet, der sich relativ zu der Ebene, welche die Hauptoberfläche beinhaltet, am weitesten entfernt befindet, entspricht, wobei die Vorsprungshöhe H kleiner als jeder Innendurchmesser Di des Vorsprungs ist.

6. Anordnung nach einem der vorangehenden Ansprüche, **dadurch gekennzeichnet, dass** sich das kraftschlüssig oder formschlüssig blockierende Mittel in einer kraftschlüssig oder formschlüssig blockierenden Weise im Eingriff mit dem Vorsprung befindet, und dadurch, dass die Vorsprungshöhe so ist, dass das kraftschlüssig und/oder formschlüssig blockierende Mittel den Vorsprung verlässt.

7. Verfahren zum Erzeugen einer Anordnung nach einem der vorangehenden Ansprüche, wobei das Verfahren einen Extrusionsprozess umfasst.

## Revendications

1. Ensemble comprenant plusieurs éléments de fixation agencés sur une plaque commune, dans lequel chaque élément de fixation est conçu pour s'engager avec un élément de verrouillage positif ou par frottement par la biais d'un verrouillage positif ou par frottement et comprend une protubérance réalisée comme une extrusion, dans lequel la protubérance (1):
fait saillie à partir de la plaque (10), ladite plaque (10) s'étendant le long d'un plan principal (A) et présentant une surface première (2) située sur le côté opposé à la protubérance {1), et
comprend un côté intérieur (4), dans lequel le côté intérieur (4) forme un cercle présentant un diamètre intérieur Di dans un plan qui est parallèle au plan principal,
dans lequel un premier plan (A') parallèle au plan principal (A) comprend un cercle présentant le premier diamètre intérieur Di' et un second plan (A") qui est parallèle au plan principal {A) comprend un cercle présentant le second diamètre intérieur Di", et dans lequel le premier plan (A) est plus près de la surface première {2) que le second plan (A"), dans lequel le premier diamètre intérieur Di' est supérieur au second diamètre intérieur Di", et
l'élément de fixation comprend une section de gorge (2a) qui forme au moins partiellement un segment de cercle présentant un rayon de cercle R dans un plan perpendiculaire au plan principal, dans lequel la plaque (10) présente une épaisseur T, dans lequel la section de gorge (2a) relie la surface première (2) de la plaque (10) au côté intérieur (4) de la protubérance (1) principalement, et dans lequel la section de gorge comprend un segment de cercle présentant un rayon de cercle R, **caractérisé en ce que** ledit rayon de cercle R correspond à R = 0,33*T.

2. Ensemble selon la revendication 1, **caractérisé en ce que** la protubérance (1) comporte une ouverture.

3. Ensemble selon l'une des revendications précédentes, **caractérisé en ce que**, dans le plan parallèle au plan principal (A), dans lequel le diamètre intérieur Di est défini, le côté extérieur (3) de la protubérance (1) forme un cercle présentant un diamètre extérieur Do, et la moitié de la différence entre le diamètre intérieur Di et le diamètre extérieur Do est inférieure à l'épaisseur T de de la plaque (10).

4. Ensemble selon l'une des revendications précédentes, **caractérisé en ce que** la différence maximale ΔDi entre le premier diamètre intérieur Di' et le second diamètre intérieur Di" correspond à ΔDi = DIS*tan α, où un angle d'inclinaison α est sensiblement égal à 1° et DIS est la distance entre le premier plan et le second plan.

5. Ensemble selon l'une des revendications précédentes, **caractérisé en ce que** l'élément de fixation présente une hauteur de protubérance H qui correspond à la distance entre le plan comprenant la surface première (2) et le plan qui est parallèle au plan principal comprenant la partie de protubérance qui est située le plus loin par rapport au plan comprenant la surface première, dans lequel la hauteur de protubérance H est inférieure à tout diamètre intérieur Di de la protubérance.

6. Ensemble selon l'une des revendications précédentes, **caractérisé en ce que** ledit élément de verrouillage par frottement et/ou positif est engagé avec la protubérance par le biais d'un verrouillage positif ou par frottement, et **en ce que** la hauteur de protubérance est telle que l'élément de verrouillage par frottement et/ou positif sorte de la protubérance.

7. Procédé de production d'un ensemble selon l'une des revendications précédentes, dans lequel le procédé comprend un procédé d'extrusion.
